# EUROPÄISCHE PATENTSCHRIFT

(11) **EP 2 447 673 B1**
(45) Veröffentlichungstag und Bekanntmachung des Hinweises auf die Patenterteilung: **10.05.2017**
(21) Anmeldenummer: 11187114.1
(22) Anmeldetag: 28.10.2011
(51) Int. Cl.: G01C 21/34

(54) **Verfahren zum Betreiben einer Navigationseinrichtung und entsprechende Navigationseinrichtung**
Method for operating a navigation device and corresponding navigation device
Procédé de fonctionnement d'un dispositif de navigation et dispositif de navigation associé

(30) Priorität: 29.10.2010 DE 102010050075
(43) Veröffentlichungstag der Anmeldung: 02.05.2012
(73) Patentinhaber: Bayerische Motoren Werke Aktiengesellschaft, 80809 München (DE)
(72) Erfinder: Dr.Tava, Marcello, 81369 München (DE)

(56) Entgegenhaltungen:
- EP-A1- 2 270 764
- EP-A2- 1 804 226
- DE-A1- 19 816 585
- DE-T2- 60 201 051
- US-A1- 2009 248 291
- US-A1- 2010 179 751

## Beschreibung

Die Erfindung betrifft ein Verfahren zum Betreiben einer Navigationseinrichtung und eine Navigationseinrichtung.

Navigationseinrichtungen werden insbesondere in modernen Kraftfahrzeugen zunehmend häufig-eingesetzt. Sie ermöglichen ein Ermitteln einer Route zwischen einem Ausgangspunkt und einem Zielpunkt und dann regelmäßig eine Zielführung hin zu dem Ziel unter Berücksichtigung einer aktuell ermittelten Position, die regelmäßig mittels eines GPS-Systems ermittelt wird.

Zunehmend sind Navigationseinrichtungen auch mit einer Kommunikationsschnittstelle ausgerüstet, die eine Kommunikation mit einer externen Rechnereinheit ermöglicht. Dabei erfolgt beispielsweise die Kommunikation über eine Mobilfunkschnittstelle und ein entsprechendes Mobilfunknetz, das auch mit dem Internet gekoppelt sein kann. Ein solches Navigationssystem, das neben der Navigationseinrichtung mit der ihr zugeordneten Kommunikationsschnittstelle auch eine externe Rechnereinheit umfasst, ermöglicht es beispielsweise, eine Route, repräsentiert durch Routenelemente, zu der Navigationseinrichtung zu übertragen und dann dort zur Routenführung einzusetzen. Zu einer möglichst effizienten Übertragung der benötigten Information bezüglich der Route erfolgt bevorzugt eine Datenreduktion auf mehrere Routenelemente, die die Route möglichst eindeutig kennzeichnen. Die jeweiligen Routenelemente können dann in der Navigationseinrichtung eingesetzt werden zum Rekonstruieren der Route und dann zur Zielführung von dem Ausgangspunkt zu dem vorgegebenen Ziel.

In der US 2009/0248291 A1 ist beschrieben, eine dehydrierte Route zwischen einem mobilen Gerät und einem Server über ein Kommunikationsnetzwerk zu übertragen. Die dehydrierte Route umfasst sogenannte Brotkrümel, die umfassen eine Repräsentation von Koordinaten eines Punktes und einer Repräsentation von einer Ausrichtung der Route, die in den Brotkrümel hineinführt und ihn verlässt.

Zur Rekonstruktion wird eine Verbindung, die am nächsten zu dem Startbrotkrümel ist, mit einer Ausrichtung am nächsten zu der des den Brotkrümel verlassenden Ausrichtung bestimmt und in die rekonstruierte Route gesetzt. Der Verbindung wird gefolgt bis zu ihrem Endknoten. Wenn dieser Knoten nicht bei dem nächsten Brotkrümel ist oder die Endausrichtung der Verbindung nicht der eingehenden Ausrichtung des nächsten Brotkrümels entspricht, wird die nächstliegende am meisten parallel liegende Verbindung ausgewählt und in die rekonstruierte Route eingesetzt.

DE 60201051 T2 beschreibt ein Ausführen eines Landkartenabgleichs auf der Grundlage der Straßenverlaufsinformationen, Identifizieren eines Zielstraßenabschnitts auf der digitalen Landkarte und Spezifizieren einer Ereigniseintrittsposition auf der Grundlage der Ereignisinformationen. Die Ereignisinformationen bezeichnen die Ereigniseintrittsposition innerhalb des Zielstraßenabschnitts unter Verwendung der relativen Positionierung. Das Identifizieren des Zielstraßenabschnitts umfasst das Ermitteln einer Straße zwischen den ausgewählten Knoten durch Verwendung einer Routensuche.

US 2010/0179751 A1 offenbart eine Navigationsvorrichtung, die einen Nutzer auf Basis einer Kommunikation mit einem Navigationsserver führt. Die Navigationsvorrichtung umfasst eine Navigationskartenspeichereinheit, die Navigationskarteninformationen speichert. Ferner umfasst sie eine erste Verarbeitungseinheit, die dem Navigationsserver eine aktuelle Position und eine Zielposition des Nutzers kommuniziert. Ferner umfasst sie eine zweite Verarbeitungseinheit, die eine Zielverbindung erkennt, die durch den Navigationsserver extrahiert wurde als die Verbindung, die eine Extraktionsbedingung erfüllt.

EP 2270764 A1 beschreibt, dass Routenpunktinformationen von einem Server einem Navigationsapparat zur Verfügung gestellt werden. Routenpunktinformation besteht aus der Anzahl der Routenknoten, den Koordinaten der Routenknoten, den Koordinaten von Zusatzpunkten und Attributinformation.

Attributinformation umfasst Information, die Routenknoten und Verbindungen bestimmt. Auf Seiten des Navigationsapparates wird die Attributinformation genutzt, um eine Kandidatenstraße zu suchen, die mit einer temporären Verbindung übereinstimmt. Wenn eine solche Übereinstimmung gefunden wurde, wird ein Knoten gesucht, der übereinstimmt bezüglich der Koordinaten und Attribute des Routenknotens und zwar von Kreuzungsknoten, die in der Kandidatenstraße umfasst sind. Wenn die Verarbeitung aller Routenknoten vervollständigt ist, wird eine Navigationsroute ermittelt auf Basis der lokalen Karteninformation, die eine rekonstruierte Navigationsroute darstellt.

Die Aufgabe, die der Erfindung zugrunde liegt, ist es, ein Verfahren zum Betreiben einer Navigationseinrichtung und eine Navigationseinrichtung zu schaffen, die einen benutzerfreundlichen Betrieb der Navigationseinrichtung ermöglicht.

Die Aufgabe wird gelöst durch die Merkmale der unabhängigen Patentansprüche. Vorteilhafte Ausgestaltungen sind in den Unteransprüchen gekennzeichnet.

Gemäß einem ersten Aspekt zeichnet sich die Erfindung aus durch ein Verfahren zum Betreiben einer Navigationseinrichtung. Gemäß einem zweiten Aspekt zeichnet sich die Erfindung aus durch eine Navigationseinrichtung, die ausgebildet ist zum Durchführen des Verfahrens und optional auch der vorteilhaften Ausgestaltung des Verfahrens.

Es werden mehrere Routenelemente, die jeweils mindestens einen Parameter umfassen, in der Navigationseinrichtung bereitgestellt, wobei die Routenelemente eine Route charakterisieren. Beispielsweise können die Routenelemente Wegpunkte umfassen. Die jeweiligen Routenelemente werden zur Rekonstruktion der Route lokalen Routenelementen zugeordnet, die in einer digitalen Karte gespeichert sind, die in der Navigationseinrichtung gespeichert ist. Für das jeweilige Routenelement wird ein Gütemaß für die Zuordenbarkeit zu einem lokalen Routenelement abhängig von mindestens einem des mindestens einen Parameters ermittelt. Die lokalen zugeordneten Routenelemente können eingesetzt werden zum Rekonstruieren der Route, die dann Grundlage für eine Zielführung sein kann. Grundsätzlich kann so die durch die Routenelemente charakterisierte Route abweichen von der rekonstruierten Route mittels der zugeordneten lokalen Routenelemente. Der Grund hierfür können insbesondere unterschiedliche Aktualisierungsgrade der digitalen Karte in der Navigationseinrichtung im Vergleich zu der den bereitgestellten Routenelementen zugeordneten, insbesondere externen digitalen Karte sein. So können beispielsweise je nach Aktualisierungsgrad unterschiedliche Straßenverläufe vorhanden sein oder auch Straßen hinzukommen oder wieder verschwinden oder auch beispielsweise Straßennamen verändert sein.

Für das jeweilige Routenelement wird ein Gütemaß für die Zuordenbarkeit zu einem lokalen Routenelement abhängig von mindestens einem des mindestens einen Parameters ermittelt. Auf diese Weise ist das Gütemaß repräsentativ für eine Korrelation zwischen dem jeweiligen Routenelement und einem zugeordneten lokalen Routenelement.

Ein Routenrekonstruktionsgütemaß wird abhängig von den jeweiligen Gütemaßen der Routenelemente ermittelt. Auf diese Weise ist eine Information verfügbar, die repräsentativ ist für eine Korrelation zwischen der Route und einer mittels der zugeordneten lokalen Routenelemente rekonstruierten Route. Dies ermöglicht so einen besonders benutzerfreundlichen Betrieb der Navigationseinrichtung. Beispielsweise kann das Routenrekonstruktionsgütemaß geeignet signalisiert werden, so beispielsweise optisch und/oder akustisch.

Ferner wird bei einem vorgegebenen Rekonstruktionsschwellenwert abhängig davon, ob das Routenrekonstruktionsgütemaß den Rekonstruktionsschwellenwert in einer Ausführungsform unterschreitet, in einer weiteren Ausführungsform überschreitet, signalisiert, dass die Route nicht rekonstruiert werden konnte. Der Benutzer kann dann beispielsweise die Möglichkeit haben, die Route zu verwerfen oder sie trotz einer gewissen Zielführungsunsicherheit zur Zielführung einzusetzen.

Bevorzugt wird, wenn ein hoher Wert des Routenrekonstruktionsmaßes repräsentativ ist für einen hohen Korrelationsgrad der Route zu der mittels der zugeordneten lokalen Routenelemente rekonstruierten Route, signalisiert, dass die Route nicht rekonstruiert werden konnte, wenn das Routenrekonstruktionsgütemaß den Rekonstruktionsschwellenwert unterschreitet. Wenn a andererseits ein hoher Wert des Routenrekonstruktionsgütemaßes repräsentativ ist für einen geringen Korrelationsgrad der Route zu der mittels der zugeordneten lokalen Routenelemente rekonstruierten Route, wird abhängig davon, ob das Routenrekonstruktionsgütemaß den Rekonstruktionsschwellenwert überschreitet, signalisiert, dass die Route nicht rekonstruiert werden konnte.

Somit erfolgt je nach Ausgestaltung des Informationsgehalts des Routenrekonstruktionsgütemaßes das entsprechende Signalisieren, dass die Route nicht rekonstruiert werden konnte, in einem Fall, wenn der Rekonstruktionsschwellenwert unterschritten wird, und in dem anderen Fall, wenn der Rekonstruktionsschwellenwert überschritten wird.

Gemäß einer weiteren vorteilhaften Ausgestaltung wird für die jeweiligen Parameter des jeweiligen Routenelements ein jeweiliges Parametergütemaß ermittelt, das charakteristisch ist für die jeweilige Zuordenbarkeit des jeweiligen Parameters zu einem jeweils korrespondierenden Parameter des dem Routenelement zugeordneten lokalen Routenelements. Das Gütemaß für das jeweilige Routenelement wird dann abhängig von den Parametergütemaßen ermittelt.

Auf diese Weise kann besonders einfach und präzise das Gütemaß für das jeweilige Routenelement ermittelt werden.

Gemäß einer weiteren vorteilhaften Ausgestaltung werden zum Ermitteln des Gütemaßes die Parametergütemaße mit jeweiligen vorgegebenen Wichtungsfaktoren gewichtet. Auf diese Weise kann eine geeignete Wertung der einzelnen Parametergütemaße beim Ermitteln des Gütemaßes einfach berücksichtigt werden und so eine besonders präzise Ermittlung des Gütemaßes erfolgen.

Gemäß einer weiteren vorteilhaften Ausgestaltung werden zum Ermitteln des Routenrekonstruktionsgütemaßes die Gütemaße der Routenelemente abhängig von einem Entfernungskennwert gewichtet, wobei der Entfernungskennwert repräsentativ ist für eine Entfernung zu einem jeweils geografisch benachbarten Routenelement. Auf diese Weise kann durch entsprechende Vorgabe des jeweiligen Entfernungskennwertes beispielsweise bei geografisch eng benachbarten Routenelementen ein Einfluss derartiger Gütemaße auf das Routenrekonstruktionsgütemaß gering gehalten werden.

In diesem Zusammenhang wird die Erkenntnis genutzt, dass bei geografisch eng benachbarten Routenelementen auch bei einem Gütemaß, das repräsentativ ist für eine geringe Korrelation, der Einfluss auf die Korrelation der rekonstruierten Route zu der Route relativ gering ist.

Besonders vorteilhaft ist es auch, wenn der Rekonstruktionsschwellenwert durch eine Benutzereingabe vorgebbar ist. Auf diese Weise kann dann durch den Benutzer gesteuert werden, wann ihm signalisiert wird, dass eine Route nicht rekonstruiert werden konnte.

gebildet ist, mit der Kommunikationsschnittstelle 9 der Navigationseinrichtung 1 zu kommunizieren. Die externe Rechnereinheit 11 kann beispielsweise als so genannter Backendserver ausgebildet sein oder beispielsweise als ein Server eines entsprechenden Diensteanbieters ausgebildet sein.

Die externe Rechnereinheit 11 kann dazu ausgebildet sein, eine Route zu ermitteln und insbesondere die Route zu abstrahieren durch mehrere Routenelemente RE, die die Route charakterisieren. In diesem Zusammenhang kann insbesondere für eine effiziente Datenübertragung zwischen den Kommunikationsschnittstellen 9 und 13 ein möglichst komprimierter Datenumfang wünschenswert sein. Zum Erreichen eines komprimierten Datenumfangs kann insbesondere ein geeignetes Komprimierungsverfahren eingesetzt werden, mittels dessen beispielsweise eine Anzahl der Routenelemente RE, die jeweils mindestens einen Parameter PAR umfassen und die Route charakterisieren, möglichst gering gehalten und insbesondere minimiert wird.

Diese mehreren Routenelemente RE, die die Route charakterisieren, werden, insbesondere auf Anforderung der Navigationseinrichtung 1 hin, zu dieser übermittelt.

Die Navigationseinrichtung 1 ist insbesondere mit ihrer Rechnereinheit 3 dazu ausgebildet, die jeweiligen Routenelemente RE lokalen Routenelementen LRE zuzuordnen, die in einer digitalen Karte gespeichert sind, die in der Navigationseinrichtung 1 und dort insbesondere in dem Datenspeicher der Rechnereinheit 3 gespeichert sind. Beim Zuordnen der jeweiligen lokalen Routenelemente LRE zu den jeweiligen Routenelementen RE wird insbesondere überprüft, inwiefern die jeweiligen Parameter PAR der einzelnen lokalen Routenelemente LRE zu den jeweiligen des Routenelements RE korrelieren. Es wird so der am besten geeigneteste Kandidat der lokalen Routenelemente LRE dem jeweiligen Routenelement RE zugeordnet. Die Parameter PAR der Routenelemente RE und auch der lokalen Routenelemente LRE sind beispielsweise charakteristisch für eine Geokoordinate und/oder einen Straßennamen und/oder eine Fahrtrichtung und/oder eine geodätische Höhe und/oder einen Straßentyp und/oder eine Anzahl an Fahrspuren und/oder eine Ausrichtung bezüglich einer vorgegebenen Himmelsrichtung und/oder einer erlaubten oder durchschnittlichen Geschwindigkeit auf einer Straße und/oder einer baulichen Trennung einer Straße.

Die mittels der zugeordneten lokalen Routenelemente LRE rekonstruierte Route kann dann eingesetzt werden zur Signalisierung auf der Signalisierungseinheit und/oder zur Zielführung zu einem Zielpunkt der rekonstruierten Route.

Darüber hinaus wird bei dem Betrieb der Navigationseinrichtung 3 für das jeweilige Routenelement RE ein Gütemaß für die Zuordenbarkeit zu einem lokalen Routenelement LRE abhängig von mindestens einem des mindestens einen Parameters PAR ermittelt. In diesem Zusammenhang wird für den jeweiligen Parameter PAR des jeweiligen Routenelements RE bevorzugt jeweils ein Parametergütemaß PGM ermittelt, das charakteristisch ist für die jeweilige Zuordenbarkeit des jeweiligen Parameters PAR zu dem korrespondierenden Parameter des zugeordneten lokalen Routenelements LRE ist.

Ferner wird das Gütemaß GM für das jeweilige Routenelement RE abhängig von den Parametergütemaßen PGM ermittelt. Die Parametergütemaße PGM können jeweils einen vorgegebenen Wertebereich einnehmen, der beispielsweise zwischen 0 bei nicht vorhandener Übereinstimmung und 1 bei vollkommenener Übereinstimmung liegen kann.

So kann beispielsweise falls der Parameter PAR eine Geokoordinate ist bei einer vollständigen Übereinstimmung der Werte der Geokoordinaten des zugeordneten lokalen Routenelementes LRE mit dem des jeweiligen Routenelements RE das jeweilige Parametergütemaß PGM den Wert 1 aufweisen.

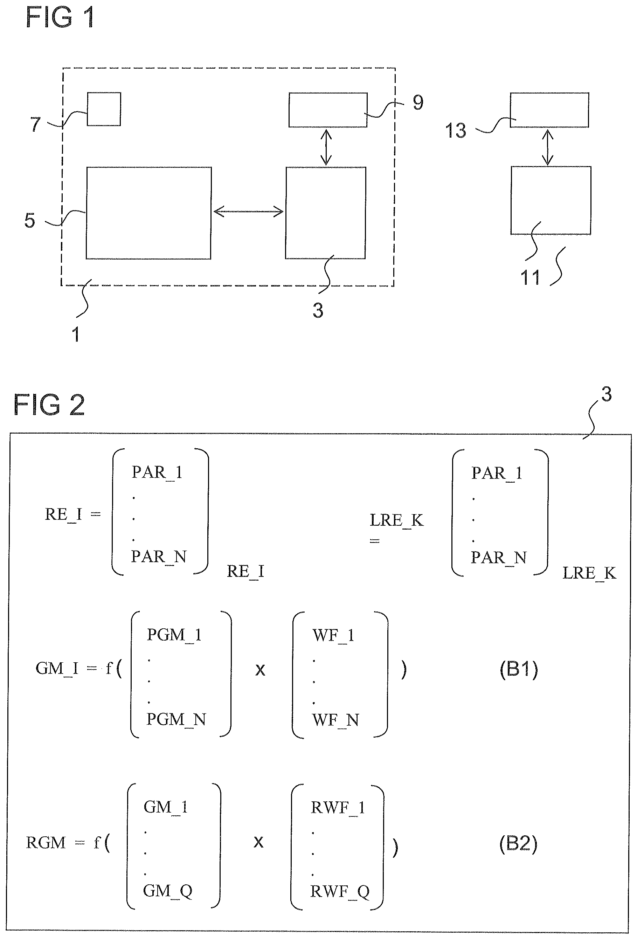

Bevorzugt werden zum Ermitteln des Gütemaßes GM die Parametergütemaße PGM mit jeweiligen vorgegebenen Wichtungsfaktoren WF gewichtet, wie dies beispielhaft in der Figur 2 anhand der Berechnungsvorschrift B1 dargestellt ist. Mittels der Wichtungsfaktoren WF kann so eine relative Relevanz der einzelnen Parametergütemaße PGM untereinander für die Ermittlung des Gütemaßes GM berücksichtigt werden. So kann beispielsweise der Parameter PAR, der charakteristisch ist für eine Geokoordinate, relativ hoch bewertet werden im Vergleich zu dem Straßennamen. Ferner wird in der Navigationseinrichtung und dort insbesondere in der Rechnereinheit 3 ein Routenrekonstruktionsgütemaß RGM abhängig von den jeweiligen Gütemaßen GM der Routenelemente RE ermittelt.

Dabei werden bevorzugt die einzelnen Gütemaße GM mit einem jeweiligen Entfernungskennwert RWF gewichtet, der jeweils repräsentativ ist für eine Entfernung zu dem jeweils geografisch benachbarten Routenelement RE. Somit erfolgt das Ermitteln des Routenrekonstruktionsgütemaßes RGM beispielsweise mittels der Berechnungsvorschrift B2.

In der Figur 2 repräsentiert ein Index I bei dem Routenelement RE ein beliebiges von einer Anzahl an Q Routenelementen RE. Der Index I bei dem Gütemaß GM repräsentiert ein beliebiges von einer Anzahl an Q Gütemaßen GM. Eine Anzahl Q an Routenelementen RE repräsentieren die jeweilige Route. Eine Anzahl N repräsentiert die Anzahl der jeweiligen Parameter PAR und entsprechend auch die Anzahl der Parametergütemaße PGM und auch die Anzahl der entsprechenden Wichtungsfaktoren WF.

Zum Ermitteln des Routenrekonstruktionsgütemaßes RGM wird eine Anzahl Q an Gütemaßen GM und bevorzugt auch eine Anzahl Q an Entfernungskennwerten RWF eingesetzt.

Eine Anzahl K repräsentiert eine Anzahl an lokalen Routenelementen LRE, die in der digitalen Karte in der Rechnereinheit 3 gespeichert sind. Im Allgemeinen ist somit die Anzahl K wesentlich größer als die Anzahl Q.

Das ermittelte Routenrekonstruktionsgütemaß RGM kann beispielsweise mittels der Signalisierungseinheit 5 signalisiert werden. Das Signalisieren kann beispielsweise optisch und/oder akustisch erfolgen. Darüber hinaus kann dem Benutzer beispielsweise das Rekonstruktionsgütemaß RGM signalisiert werden und er aufgefordert werden, zu entscheiden, ob er aufgrund des jeweiligen Wertes des Rekonstruktionsgütemaßes RGM die so rekonstruierte Route weiter einsetzen will, so insbesondere zur Zielführung oder diese verwerfen will.

Bevorzugt kann auch ein Rekonstruktionsschwellenwert vorgegeben sein und abhängig davon, ob das Rekonstruktionsgütemaß RGM den Rekonstruktionsschwellenwert unterschreitet, signalisiert werden, dass die Route nicht rekonstruiert werden konnte.

### Bezugszeichenliste

- 1: Navigationseinrichtung
- 3: Rechnereinheit
- 5: Signalisierungseinheit
- 7: Positionsbestimmungseinheit
- 9: Kommunikationsschnittstelle

- 11: externe Rechnereinheit
- 13: Kommunikationsschnittstelle

- RE, RE_I: Routenelement
- PAR, PAR_1..N: Parameter
Route
Digitale Karte
- GM, GM_I: Gütemaß für die Zuordenbarkeit
- LRE, LRE_K: lokales Routenelement
- RGM: Routenrekonstruktionsgütemaß
- PGM, PGM_1..N: Parametergütemaß
- WF, WF_1..N: Wichtungsfaktor
- RWF, RWF_1..Q: Entfernungskennwert
Rekonstruktionsschwellenwert

## Patentansprüche

1. Verfahren zum Betreiben einer Navigationseinrichtung (1), bei dem
- mehrere Routenelemente (RE), die jeweils mindestens einen Parameter (PAR) umfassen in der Navigationseinrichtung (1) bereitgestellt werden, wobei die Routenelemente (RE) von einer externen Rechnereinheit (11) übermittelt werden und eine Route charakterisieren
- zur Rekonstruktion der Route die jeweiligen Routenelemente (RE) lokalen Routenelementen (LRE) zugeordnet werden, die in einer digitalen Karte gespeichert sind, die in der Navigationseinrichtung (1) gespeichert ist, wobei die lokalen Routenelemente (LRE) dazu vorgesehen sind die Route zu rekonstruieren,
**dadurch gekennzeichnet, dass** bei dem Verfahren ferner
- für das jeweilige Routenelement (RE) ein Gütemaß (GM) für die Zuordenbarkeit zu einem lokalen Routenelement (LRE) abhängig von mindestens einem des mindestens einen Parameters (PAR) ermittelt wird,
- ein Routenrekonstruktionsgütemaß (RGM) abhängig von den jeweiligen Gütemaßen (GM) der Routenelemente (RE) ermittelt wird,
- ein Rekonstruktionsschwellenwert vorgegeben ist und abhängig davon, ob das Routenrekonstruktionsgütemaß (RGM) den Rekonstruktionsschwellenwert unterschreitet, signalisiert wird, dass die Route nicht rekonstruiert werden konnte.

2. Verfahren zum Betreiben einer Navigationseinrichtung (1), bei dem
- mehrere Routenelemente (RE), die jeweils mindestens einen Parameter (PAR) umfassen, in der Navigationseinrichtung (1) bereitgestellt werden, wobei die Routenelemente (RE) von einer externen Rechnereinheit (11) übermittelt werden und eine Route charakterisieren,
- zur Rekonstruktion der Route die jeweiligen Routenelemente (RE) lokalen Routenelementen (LRE) zugeordnet werden, die in einer digitalen Karte gespeichert sind, die in der Navigationseinrichtung (1) gespeichert ist, wobei die lokalen Routenelemente (LRE) dazu vorgesehen sind die Route zu rekonstruieren,
**dadurch gekennzeichnet, dass** bei dem Verfahren ferner
- für das jeweilige Routenelement (RE) ein Gütemaß (GM) für die Zuordenbarkeit zu einem lokalen Routenelement (LRE) abhängig von mindestens einem des mindestens einen Parameters (PAR) ermittelt wird,
- ein Routenrekonstruktionsgütemaß (RGM) abhängig von den jeweiligen Gütemaßen (GM) der Routenelemente (RE) ermittelt wird,
- ein Rekonstruktionsschwellenwert vorgegeben ist und abhängig davon, ob das Routenrekonstruktionsgütemaß (RGM) den Rekonstruktionsschwellenwert überschreitet, signalisiert wird, dass die Route nicht rekonstruiert werden konnte.

3. Verfahren nach einem der Ansprüche 1 oder 2, bei dem für die jeweiligen Parameter (PAR) des jeweiligen Routenelements (RE) Parametergütemaße (PGM) ermittelt werden, die charakteristisch sind für die jeweilige Zuordenbarkeit des jeweiligen Parameters (PAR) zu einem jeweils korrespondierenden Parameter (PAR) des dem Routenelement zugeordneten lokalen Routenelements (LRE) und
- das Gütemaß (GM) für das jeweilige Routenelement (RE) abhängig von den Parametergütemaßen (PGM) ermittelt wird.

4. Verfahren nach Anspruch 3,
bei dem zum Ermitteln des Gütemaßes (GM) die Parametergütemaße (PGM) mit jeweiligen vorgegebenen Wichtungsfaktoren (WF) gewichtet werden.

5. Verfahren nach einem der vorstehenden Ansprüche,
bei dem zum Ermitteln des Routenrekonstruktionsgütemaßes (RGM) die Gütemaße (GM) der Routenelemente (RE) abhängig von einem Entfernungskennwert (RWF), der repräsentativ ist für eine Entfernung zu einem jeweils geografisch benachbarten Routenelement (RE), gewichtet werden.

6. Verfahren nach einem der vorstehenden Ansprüche,
bei dem der Parameter (PAR) charakteristisch ist für eine Geokoordinate und/oder einen Straßennamen und/oder eine Fahrtrichtung und/oder eine geodätische Höhe und/oder einen Straßentyp und/oder eine Anzahl an Fahrspuren und/oder eine Ausrichtung bezüglich einer vorgegebenen Himmelsrichtung und/oder einer erlaubten oder durchschnittlichen Geschwindigkeit auf einer Straße und/oder einer baulichen Trennung der Straße.

7. Navigationseinrichtung, die dazu ausgebildet ist, das Verfahren gemäß einem der vorstehenden Ansprüche durchzuführen.

## Claims

1. A method for operating a navigation device (1), in which
- a plurality of route elements (RE), which each comprise at least one parameter (PAR), are provided in the navigation device (1), wherein the route elements (RE) are transmitted from an external computer unit (11) and characterise a route,
- in order to reconstruct the route, the respective route elements (RE) are assigned to local route elements (LRE), which are stored in a digital map, which is stored in the navigation device (1), wherein the local route elements (LRE) are provided to reconstruct the route,
**characterised in that,** also in the method,
- a quality criterion (GM) for the assignability to a local route element (LRE) is determined for each route element (RE) depending on at least one of the at least one parameters (PAR),
- a route reconstruction quality criterion (RM) is determined depending on the respective quality criteria (GM) of the route elements (RE),
- a reconstruction threshold value is predefined and, depending on whether the route reconstruction quality criterion (RGM) falls below the reconstruction threshold value, it is signalled that the route could not be reconstructed.

2. A method for operating a navigation device (1), in which
- a plurality of route elements (RE), which each comprise at least one parameter (PAR), are provided in the navigation device (1), wherein the route elements (RE) are transmitted from an external computer unit (11) and characterise a route,
- in order to reconstruct the route, the respective route elements (RE) are assigned to local route elements (LRE), which are stored in a digital map, which is stored in the navigation device (1), wherein the local route elements (LRE) are provided to reconstruct the route,
**characterised in that,** also in the method,
- a quality criterion (GM) for the assignability to a local route element (LRE) is determined for each route element (RE) depending on at least one of the at least one parameters (PAR),
- a route reconstruction quality criterion (RGM) is determined depending on the respective quality measures (GM) of the route elements (RE),
- a reconstruction threshold value is predefined and, depending on whether the route reconstruction quality criterion (RGM) exceeds the reconstruction threshold value, it is signalled that the route could not be reconstructed.

3. A method according to claim 1 or claim 2, in which parameter quality criteria (PGM) are determined for the respective parameters (PAR) of each route element (RE), which parameter quality criteria are characteristic for the respective assignability of each respective parameter (PAR) to a corresponding parameter (PAR) of the local route element (LRE) assigned to the route element, and
- the quality criterion (GM) for the particular route element (RE) is determined depending on the parameter quality criteria (PGM).

4. A method according to claim 3,
in which, in order to determine the quality criterion (GM), the parameter quality criteria (PGM) are weighted with respective predefined weighting factors (WF).

5. A method according to any one of the preceding claims, in which, in order to determine the route reconstruction quality criterion (RGM), the quality criteria (GM) of the route elements (RE) are weighted depending on a distance characteristic value (RWF), which is representative for a distance from a geographically proximate route element (RE).

6. A method according to any one of the preceding claims, in which the parameter (PAR) is characteristic for a geo-coordinate and/or a road name and/or a direction of travel and/or a geodetic height and/or a road type and/or a number of road lanes and/or an orientation in relation to a predefined compass direction and/or an allowed or average speed on a road and/or a structural partitioning of the road.

7. A navigation device which is designed to carry out the method according to any one of the preceding claims.

## Revendications

1. Procédé de gestion d'un dispositif de navigation (1) selon lequel :
- plusieurs éléments d'itinéraire (RE) comprenant chacun au moins un paramètre (PAR) sont mis à disposition dans le dispositif de navigation (1), ces éléments d'itinéraire (RE) étant transmis par une unité de calcul externe (11) et caractérisant un itinéraire,
- pour permettre la reconstruction de l'itinéraire, les différents éléments d'itinéraire (RE) sont associés à des éléments d'itinéraire locaux (LRE) qui sont enregistrés dans une carte numérique qui est enregistrée dans le dispositif de navigation (1), les éléments d'itinéraire locaux (LRE) étant prévus pour permettre de reconstruire l'itinéraire,
**caractérisé en ce qu'**
en outre,
- pour chaque élément d'itinéraire (RE) est déterminé un coefficient de qualité (GM) relatif à sa possibilité d'association à un élément d'itinéraire local (LRE) en fonction du paramètre (PAR),
- un coefficient de qualité de reconstruction d'itinéraire (RGM) est déterminé en fonction des coefficients de qualité (GM) respectifs des éléments d'itinéraire (RE),
- une valeur de seuil de reconstruction est prédéfinie, et si le coefficient de qualité de reconstruction d'itinéraire (RGM) passe au-dessous de la valeur de seuil de reconstruction, il est signalé que l'itinéraire ne peut pas être reconstruit.

2. Procédé de gestion d'un dispositif de navigation (1) selon lequel :
- plusieurs éléments d'itinéraire (RE) comprenant chacun au moins un paramètre (PAR) sont mis à disposition dans le dispositif de navigation (1), ces éléments d'itinéraire (RE) étant transmis par une unité de calcul externe (11) et caractérisant un itinéraire,
- pour permettre la reconstruction de l'itinéraire, les éléments d'itinéraire (RE) respectifs sont associés à des éléments d'itinéraire locaux (LRE) qui sont enregistrés dans une carte numérique qui est enregistrée dans le dispositif de navigation (1), les éléments d'itinéraire locaux (LRE) étant prévus pour permettre de reconstruire l'itinéraire,
**caractérisé en ce qu'**
en outre :
- pour chaque élément d'itinéraire (RE), on détermine un coefficient de qualité (GM) relatif à sa possibilité d'association à un élément d'itinéraire local (LRE) en fonction du paramètre (PAR),
- un coefficient de qualité de reconstruction d'itinéraire (RGM) est déterminé en fonction des coefficients de qualité (GM) respectifs des éléments d'itinéraire (RE),
- une valeur de seuil de reconstruction est prédéfinie, et, si le coefficient de qualité de reconstruction d'itinéraire (RGM) dépasse la valeur de seuil de reconstruction, il est signalé que l'itinéraire ne peut pas être reconstruit.

3. Procédé conforme à l'une des revendications 1 et 2,
selon lequel pour chacun des paramètres (PAR) de l'élément d'itinéraire respectif (RE) sont déterminés, des coefficients de qualité de paramètre (PGM) qui caractérisent la possibilité d'association du paramètre (PAR) respectif à un paramètre correspondant respectif (PAR) de l'élément d'itinéraire local (LRE) associé à l'élément d'itinéraire, et
- le coefficient de qualité (GM) de chaque élément d'itinéraire (RE) est déterminé en fonction des coefficients de qualité de paramètre (PGM).

4. Procédé conforme à la revendication 3,
selon lequel pour permettre de déterminer le coefficient de qualité (GM), les coefficients de qualité de paramètre (PGM) sont pondérés par des facteurs de pondération (WF) prédéfinis respectifs.

5. Procédé conforme à l'une des revendications précédentes,
selon lequel pour permettre de déterminer le coefficient de qualité de la reconstruction d'itinéraire (RGM), les coefficient de qualité (GM) des éléments d'itinéraire (RE) sont pondérés en fonction d'une caractéristique d'éloignement (RWF) qui est représentative de l'éloignement par rapport à un élément d'itinéraire (RE) géographiquement voisin respectif.

6. Procédé conforme à l'une des revendications précédentes,
selon lequel le paramètre (PAR) caractérise une coordonnée géographique et/ou un nom de route et/ou une direction de déplacement et/ou une hauteur géodésique et/ou un type de route et/ou un nombre de voies de déplacement et/ou une orientation par rapport à une direction dans le ciel prédéfinie et/ou la vitesse autorisée ou moyenne sur une route et/ou un élément de séparation de la route.

7. Dispositif de navigation réalisé pour permettre la mise en oeuvre d'un procédé conforme à l'une des revendications précédentes.
